# EUROPEAN PATENT APPLICATION

(11) **EP 4 095 706 A1**
(43) Date of publication of application: **30.11.2022**
(21) Application number: 22174984.9
(22) Date of filing: 24.05.2022
(51) Int. Cl.: G06F 13/40

(54) **DATA BUS COMMUNICATIONS**

(30) Priority: 24.05.2021 GB 202107393
(71) Applicant: Nordic Semiconductor ASA, 7052 Trondheim (NO)
(72) Inventor: RYGH, Hans, 7052 Trondheim (NO)
(74) Representative: Dehns

(57) **Abstract**

A method of mediating a read transaction from a transaction source domain (4) having a first bus width to a transaction target domain (6) having a second bus width less than the first bus width, and a module (2) being configured to carry out the method steps. The method includes receiving first and second read transactions from the transaction source domain (4), associated respectively with a first and second transaction ID and indicating a first and second address of the transaction target domain (6), separating each read transaction into a plurality of sub-transactions, wherein the plurality of sub-transactions have the second bus width. The method further includes sending a sub-transaction of each plurality of sub-transactions to the transaction target domain (6), receiving, in response, first data associated with the first transaction ID and second data associated with the second transaction ID, storing the first data in the data register (22a) of a first storage element (20a) and assigning the first storage element to a first list (28), storing the second data in a data register (22b) of a second storage element (20b), and assigning the second storage element to a second list (30); and reading out data to the transaction source domain (4) from the first list (28) and the second list (30) independently of each other.

## Description

### TECHNICAL FIELD

The present invention relates to a module in an electronic device and method for mediating a read transaction from a master device to a slave device.

### BACKGROUND OF THE INVENTION

Many modern electronic devices include a number of buses to allow different on-chip devices to communicate with one another. Generally, these buses connect at least one 'master' device to at least one 'slave' device, and allow the master to issue commands to and/or exchange data with the slave.

One bus that is commonly used for on-chip communication is the Advanced eXtensible Interface (AXI) bus, defined within the ARM^{®} Advanced Microcontroller Bus Architecture specifications, e.g. the 'AXI3', 'AXI4' and AXI5' specifications. This packet-switched bus provides a high performance multi-master to multi-slave communication interface.

A further bus, known in the art *per se*, is the AXI-Lite bus (e.g. the AXI5-Lite bus) which provides a more 'lightweight' bus that supports a single transaction thread per master. The AXI-Lite protocol is generally used for devices (e.g. a slave device) that needs to communicate with only a single master device simultaneously.

The AXI specification outlines five channels for transactions, these are: the Read Address channel (AR); the Read Data channel (R); the Write Address channel (AW); the Write Data channel (W); and the Write Response channel (B).

Those skilled in the art will appreciate that certain data bus protocols, such as the AXI protocol, are burst-based protocols, i.e. they support multiple transfers for a single request, where these transfers are referred to as 'beats'. The protocol in use may specify a limit on the transaction burst length. For example, in accordance with the AXI4 specification, the maximum allowable transaction burst length is 256 beats. Conversely, AXI-Lite allows only single data transfers, i.e. the burst length limit is 1 beat.

It will also be appreciated that a bus may be divided up into different bus partitions or domains, and that each of these may use a different bus width, i.e. the number of 'lanes' that each bus partition provides for the simultaneous transfer of data may be different. A module, also referred to as a 'bridge' may be used to connect such bus partitions having different bus widths.

The present invention seeks to provide improved handling of read transactions in such a module.

### SUMMARY OF THE INVENTION

From a first aspect, the invention provides an electronic device comprising a module configured to transfer data bus transactions from a transaction source domain having a first bus width to a transaction target domain having a second bus width less than the first bus width,
the module being configured to carry out the steps of:
receiving a first read transaction from the transaction source domain, associated with a first transaction ID and indicating a first address of the transaction target domain;
separating the first read transaction into a first plurality of sub-transactions,
wherein the first plurality of sub-transactions have the second bus width;
sending the first plurality of sub-transactions to the transaction target domain;
receiving a second read transaction from the transaction source domain, associated with a second transaction ID and indicating a second address of the transaction target domain;
separating the second read transaction into a second plurality of sub-transactions, wherein the second plurality of sub-transactions have the second bus width; and
sending the second plurality of sub-transactions to the transaction target domain;
the module further comprising:
   a plurality of storage elements, comprising at least one data register, for storing data received from the transaction target domain;
   the module further configured to carry out the steps of:
      receiving first data associated with the first transaction ID, in response to sending a sub-transaction of the first plurality of sub-transactions to the transaction target domain;
      storing the first data in the data register of a first storage element and assigning the first storage element to a first list; and
      receiving second data associated with the second transaction ID, in response to sending a sub-transaction of the second plurality of sub-transactions to the transaction target domain;
      storing the second data in the data register of a second storage element, and assigning the second storage element to a second list;
      such that data can be read out to the transaction source domain from the first list and the second list independently of each other.

The first aspect of the invention extends to a method of mediating a read transaction from a transaction source domain having a first bus width to a transaction target domain having a second bus width less than the first bus width, the method comprising:
receiving a first read transaction from the transaction source domain, associated with a first transaction ID and indicating a first address of the transaction target domain;
separating the first read transaction into a first plurality of sub-transactions, wherein the first plurality of sub-transactions have the second bus width;
sending the first plurality of sub-transactions to the transaction target domain;
receiving first data associated with the first transaction ID, in response to sending a sub-transaction of the first plurality of sub-transactions to the transaction target domain;
storing the first data in the data register of a first storage element and assigning the first storage element to a first list;
receiving a second read transaction from the transaction source domain, associated with a second transaction ID and indicating a second address of the transaction target domain;
separating the second read transaction into a second plurality of sub-transactions, wherein the second plurality of sub-transactions have the second bus width;
sending the second plurality of sub-transactions to the transaction target domain;
receiving second data associated with the second transaction ID, in response to sending a sub-transaction of the second plurality of sub-transactions to the transaction target domain;
storing the second data in a data register of a second storage element, and assigning the second storage element to a second list; and
reading out data to the transaction source domain from the first list and the second list independently of each other.

The first aspect of the present invention further extends to a non-transitory computer-readable medium comprising instructions that, when executed by a processor, cause the processor to carry out a method as laid out above.

The first aspect of the present invention also extends to a computer software product comprising instructions that, when executed by a processor, cause the processor to carry out a method as laid out above.

It will be appreciated that although these method steps are laid out in a sequenced order, unless specified there is no requirement that the method steps be carried out in the particular order in which they are laid out.

Thus it will be seen that, in accordance with the invention, by storing received data, the module is able to receive data from the transaction target domain when it is ready to be returned, rather than the data being forwarded directly to the transaction source domain, in which case any backpressure from the transaction source domain would be propagated to the transaction target domain.

In accordance with the present invention, data which is associated with different transaction IDs is stored in different lists, such that the data can be read out to the transaction target domain from the first list and the second list independently of each other. By this it will be understood that data stored in one of the lists can be forwarded to the transaction source domain regardless of the status of data stored in the other list(s), i.e. without having to wait for data from the other list to be received, or to be forwarded. Thus data can be forwarded to the transaction source domain in a different order from that in which it is received from the transaction target domain. Since the data can be read out independently from each list, return of data which is obtained from one address quickly need not be delayed by the module waiting for outstanding data from another address. All Read Data associated with the same transaction ID must typically be returned from the target domain in the order it was requested, but data returned for different transaction IDs might be returned in any order relative to each other. It is therefore advantageous that in accordance with the present invention sub-transactions associated with different transaction IDs can be handled independently, so that one set of sub-transactions does not "block" the other, e.g. as might be the case if the module had to receive all data for a first transaction ID before it could begin receiving data associated with a second transaction ID.

In some embodiments, the electronic device comprises a master device, wherein transactions from the master device are received in the transaction source domain. In some embodiments, the electronic device comprises a slave device, wherein transactions from the slave device are received in the transaction target domain. The transaction source domain may be provided by an AXI bus, e.g. in accordance with the 'AXI3', 'AXI4' and AXI5' specifications. The transaction target domain may be provided by an AXI bus (such as an AXI-Lite bus, e.g. the AXI5-Lite bus).

When the received transaction is separated out (i.e. down-sized) from the wider first (i.e. source) bus width to the narrower (i.e. target) bus width, it necessarily grows in length such that the data is preserved. This may result in the resultant transaction burst length after the down-sizing operation being greater than a maximum transaction burst length limit. In some embodiments, the first and/or second read transaction has a first transaction burst length and the method comprises separating the first and/or second read transaction into the plurality of sub-transactions, wherein the plurality of sub-transactions each have a respective second transaction burst length less than the first transaction burst length, i.e. the burst length is also shortened. The second transaction burst length is preferably equal to or below the maximum transaction burst length limit of the target domain.

The module may be configured to carry out these method steps. In such embodiments the module may be arranged so that incoming transactions are converted from a wider bus width to a narrower bus width (i.e. the transactions are 'down-sized'), and so that transactions are also broken down into a number of smaller transactions. Thus the module may provide for two-dimensional re-sizing (i.e. of "width" and "length") of the transaction to make it suitable for downstream components.

In addition to reducing the width (and optionally burst length) of read transactions, before forwarding them to the target domain, the module itself can re-order the issuing of read transactions when splitting the bursts to improve the latency for small bursts. Thus, in some embodiments, the method further comprises receiving a third read transaction from the transaction source domain associated with a different transaction ID than the first read transaction, after receiving the first read transaction, wherein the third read transaction is shorter than the first read transaction, and allowing the third read transaction to bypass the first read transaction. The module may be configured to carry out these method steps. By "bypass" it will be understood that the transactions are forwarded to the target domain in a different order to the order in which they were received by the module, i.e. the third read transaction is forwarded to the target domain before the first read transaction. In some embodiments, the bypass may be conditional upon the third read transaction meeting certain conditions, for example that the third read transaction is narrower than, or equal to, the second bus width (i.e. it does not need to be separated/ down-sized), and/or the third read transaction is shorter than, or equal to, a bypass threshold parameter (i.e. with a burst size lower than or equal to).

When a transaction response is received from the transaction target domain, this response will generally have the second bus width, and may be provided as a plurality of transaction responses (e.g. a number of bursts responsive to each of the plurality of second transactions sent via the second interface). The module may be arranged to combine the plurality of transaction responses to generate one or more second transaction response(s) having the first bus width, where the second transaction response(s) may be suitable for supply to the transaction source domain.

In some embodiments, the method further comprises:
receiving further data associated with the first transaction ID, in response to sending a further sub-transaction of the first plurality of sub-transactions to the transaction target domain;
checking whether the data register of the first storage element is completed; and
if the data register of the first storage element is not completed, adding the further data to the data stored in the data register of the first storage element; and
if the first storage element is completed, storing the further data in the data register of a third storage element and assigning the third storage element to the first list. Similarly, the module may be configured to additionally carry out these steps.

It will be understood that by "adding" data to a data register it is meant that newly received data is appended to existing data which is already stored in the data register of the storage element.

The data register may comprise a data value (i.e. the stored informational content), and may also comprise a "status" value and/or a "last" value, e.g. provided by one or more bits.

Data received from the transaction target domain may comprise a "status" value, which may indicate the status of the read sub-transaction associated with the data, e.g. address not valid, or transaction okay. In some embodiments, adding data to a data register may comprise recalculating the status value of the data register. Various "status" values may have an assigned order, and the status value for a data register may be calculated as the lowest order value associated with any of the data stored in that data value. For example, if the lowest order status value of any of the data in a data register is "transaction okay" then the entire contents of the data register has the status value "transaction okay". This helps to keep useful status information in relation to the received data, even where it is grouped into a storage element together for sending to the transaction source domain.

The data register may, additionally or alternatively, comprise a "last" value. This value may indicate whether or not this is the last data associated with a given transaction ID, i.e. the last sub-transaction from that transaction. In some embodiments, adding data to a data register may comprise changing the "last" value if the received data stored in the data register is the last data associated with the transaction ID.

It will furthermore be understood that by the data register being "completed" it is meant that the storage element is no longer suitable for use to store any additional data, i.e. it is unavailable. This may be because the data register is full, i.e. the entire capacity, e.g. all of the bits, of said data register are in use, storing data. Or an entire data register may be "completed", even where the received data does not fill up all of a register's capacity, e.g. if some property of the data already stored in the data register makes it unsuitable to store any further data. For example, a data register may be completed where received data previously stored in the data register is "narrow" or "unaligned".

The size of the data register may advantageously correspond to a single beat of data in the source domain, i.e. an amount of data which can be transferred to a master device on the source domain as a single data transfer per unit time e.g. one or a defined number of clock cycles. This may correspond to several beats of data received from the target domain, since the target domain has a second bus width which is smaller than the first bus width of the source domain.

By adding data into a data register of a storage element until it is completed (usually meaning that the data register is full), data is stored more efficiently since space within a storage element is not wasted, and furthermore in this way data associated with a particular transaction ID is gathered such that it can be forwarded to the transaction source domain in a single beat as described above.

It will further be understood that in some examples although the data register of the first storage element is not full (and the data register is not completed, so it could be used to store data), the further data may be larger than the available space in the data register of the first storage element, i.e. so that not all the further data is able to be stored in the first storage element. In such cases, the method may further comprise:
adding a first portion of the further data to the data stored in the first storage element, such that the first storage element is full; and
storing a second portion of the further data in the data register of a third storage element and assigning the third storage element to the first list. The first portion and the second portion may together provide the further data. This allows a storage element to be used even where the available space in its data register is not sufficient for the data received from the target domain, and the remaining portion of the data is then stored in a further storage element, therefore making the most efficient use of the available space in the portion of the module.

Similarly in some embodiments, the method further comprises:
receiving further data associated with the second transaction ID;
checking whether the data register of the second storage element is completed; and
if the data register of the second storage element is not completed, adding the further data to the data stored in the data register of the second storage element; and
if the second storage element is completed, storing the further data in the data register of a further (e.g. third or fourth) storage element and assigning the further storage element to the second list. Similarly, the module may be configured to additionally carry out these steps.

Furthermore, in some embodiments, the method may further comprise:
adding a first portion of the further data to the data stored in the second storage element, such that the second storage element is full; and
storing a second portion of the further data in the data register of a further storage element and assigning the further storage element to the second list.

In some embodiments, the method comprises checking whether each of the plurality of storage elements is currently storing data; and
if all of the storage elements are currently storing data, then not sending a sub-transaction to the target domain until at least one storage element is no longer storing data (i.e. is available for use, e.g. until data has been forwarded from the module to the target domain). The module may be configured to carry out these method steps. Thus the module advantageously checks that there are enough storage elements available, i.e. containing no data, to store the data requested by a new transaction, before that transaction is sent to the target domain.

In some embodiments, the method comprises checking, upon receipt of a read transaction from the source domain, the total amount of storage space available across the plurality of storage elements; and
if the total amount of storage space available is below a minimum threshold parameter, then not sending a sub-transaction to the target domain until data has been forwarded from the module to the target domain. The module may be configured to carry out these method steps. This ensures that the portion is not overrun with more data than can be stored in the storage elements, whilst also improving efficiency by ensuring that more than a minimum amount of data is always being requested in each sub-transaction.

The method may include, additionally or alternatively, adjusting the sub-transactions based on the amount of storage space available in the storage elements. Thus, in some embodiments, the method comprises checking, upon receipt of a read transaction from the source domain, the total amount of storage space available across the plurality of storage elements; and
if the total amount of storage space available is below the maximum transaction burst length limit of the target domain, then limiting the size of the next sub-transaction to the total amount of storage space available. The module may be configured to carry out these method steps. This may ensure that the storage elements are not overrun with more data than can be stored in the storage elements even where the second bus width (of the target domain) is sufficiently large to allow more data to be transferred in a single burst.

In some embodiments, the module defines a total number of lists to which the plurality of storage elements can be assigned, and the method comprises checking, upon receipt of a further read transaction from the source domain, whether a list already corresponds to the transaction ID associated with the read transaction; and
if no list corresponds to the transaction ID, checking whether a number of lists in use is equal to the total number of lists; and
if the total number of lists in use is equal to the total number of lists, then not sending sub-transactions, associated with the further read transaction, to the target domain until a list becomes available for use. The module may be configured to carry out these method steps. Thus, in such arrangements, the module checks whether all of the available lists, or channels, are already in use for outstanding read transactions, i.e. waiting for data to be returned from the target domain, before issuing a further sub-transaction. It will be understood that a list is "in use" where at least one storage element is assigned to said list. It will further be understood that a list will therefore no longer be "in use" once the data contained in all storage elements which were associated with said list has been forwarded to the source domain.

In some embodiments, each storage element further comprises a linking register, for referencing another of the storage elements as being a subsequent storage element assigned to the same list. For example, the linking register may be configured to store an address for another storage element, e.g. the next storage element in the list to which the storage element is assigned.

For example, where data associated with the first transaction ID is stored in both the first storage element and the third storage element, and both are assigned to the first list (as described above), the linking register of the first storage element stores a reference (e.g. the address) for the third storage element. Thus, when reading the contents of the first storage element, the contents of the linking register indicates that the third storage element is the next storage element in (i.e. belonging to) the first list. Similarly, where data associated with the second transaction ID is stored in both the second storage element and the further (third/fourth) storage element, and both are assigned to the second list (as described above), the linking register of the second storage element stores a reference (e.g. the address) for the further storage element. The method may therefore comprise, when (i.e. as part of the same process, either before, simultaneously or after) storing data in a storage element and updating the linking register of the preceding storage element (e.g. the storage element which was previously the tail storage element) of the corresponding list to refer to the storage element.

In some embodiments, in addition to the first list and the second list, the module additionally comprises an availability list, indicating a sub-set of the plurality of storage elements which are available for data storage. In some embodiments, the availability list is provided by a pair of registers, wherein a first register of the pair of registers indicates the first available storage element, and wherein a second register of the pair of registers indicates the final available storage element. Each available storage element may comprise a linking register, which refers to a next available storage element in the availability list.

In some embodiments, the method further comprises after assigning a storage element to a respective list, removing said storage element from the availability list. For example, the method may further comprise, after storing the first data in the data register of the first storage element and assigning the first storage element to the first list, removing the first storage element from the availability list. It will be understood that the same applies where second data is stored in the second storage element etc. Similarly, the module may be configured to carry out this step.

In some embodiments the module further comprises at least two sets of registers, wherein each set of registers corresponds to a respective list. Thus in some embodiments, the number of sets of registers defines the total number of lists to which the plurality of storage elements can be assigned, i.e. they are equal, since each set of registers corresponds to a list. This therefore defines how many outstanding read transactions can be handled. In some embodiments, each set of registers comprises a use register, indicating whether that list is in use, and an ID register, indicating a transaction ID associated with data stored in the storage elements of said list. In some embodiments, each set of registers comprises a head register, specifying a storage element at the start of said list and a tail register specifying a storage element at the end of said list. By "specifying" it will be understood that the register may comprise an address, or array index of a particular storage element.

Thus, in some embodiments, where first data is stored in the first storage element, the method further comprises updating the use register of a first set of registers, corresponding to the first list, to show that the first list is in use. Additionally, or alternatively, the method may comprise updating the ID register of the first set of registers to contain the first transaction ID.

Additionally, or alternatively (including even where a list already exists corresponding to the first transaction ID), the method may comprise updating the head register to specify the first storage element as the start of the first list and/or updating the tail list to specify the first storage element, or more generally the newly added element, as the end of the first list. Where data associated with the first transaction ID is further stored in the third storage element, the method may further comprise updating the tail register of the first set of registers to specify that the third storage element is the end of the first list.

It will be understood that the module may therefore be configured to carry out these steps. It will be further understood that these steps may likewise be carried out in relation to storing data associated with the second transaction ID in the second storage element.

In some embodiments, the method comprises forwarding the data from the data register of the storage element specified first (e.g. by the head register) to the source domain, once a sending condition is met. The sending condition may require that the data register of the storage element is completed (e.g. full), and may also depend on a condition of the module more generally, e.g. being in a "ready to send" state. The module may be configured to carry out these method steps.

In such embodiments, the method may further comprise removing the storage element from the corresponding (e.g. first or second) list, e.g. by updating the head register of the first list to specify the next storage element in the first list as the start of the first list and/or updating the tail register of the availability list to specify the storage element from which data was just forwarded as the end of the availability list.

Where the storage element from which data was forwarded was the tail element of the corresponding list, i.e. the final data for that transaction ID, the method may further comprise updating the use register of the list to show that the list is no longer in use, and/or updating the ID register of the list to be empty.

In some embodiments, the data stored in the data register of each storage element is transmitted to the source domain in a separate transaction, e.g. one beat of data is transmitted per storage element.

The module may also be arranged to arbitrate, i.e. decide the order in which to send data from the lists back the source domain, e.g. when a sending condition is met. The method may also include such an arbitration step. Thus, in some embodiments, where a storage element in the first list and a storage element in the second list are available to send to the source domain, the method comprises checking whether data associated with a transaction ID of the first list or the second list has already been sent to the source domain; and
if data associated with the transaction ID of the first list has already been sent to the source domain (e.g. in a preceding transaction), forwarding the storage element which is first in the first list; and
if no data associated with the transaction ID of the first list or the transaction ID of the second list has been forwarded to the storage element, checking whether the first list or the second list contains a lower number of storage elements, and forwarding data from a data register of a storage element to the source domain from the list containing the lower number of storage elements. This may provide a particularly efficient means of deciding which storage element to forward.

Features of any aspect or embodiment described herein may, wherever appropriate, be applied to any other aspect or embodiment described herein. Where reference is made to different embodiments or sets of embodiments, it should be understood that these are not necessarily distinct but may overlap. It will furthermore be understood that references made to a method comprising a step correspondingly extend to a module "configured to" carry out a step, and vice versa.

### BRIEF DESCRIPTION OF THE DRAWINGS

An embodiment of the invention will now be described, by way of example only, with reference to the accompanying drawings, in which:
Figure 1 is a schematic diagram showing a module according to an embodiment of the present invention;
Figure 2 is a schematic diagram showing the registers of the sub-module of the module of Figure 1, in a case where no data is stored in the storage elements;
Figure 3 is a schematic diagram showing an alternative representation of the registers of Figure 2;
Figure 4 is a schematic diagram showing the registers of the sub-module of Figure 2, where data is stored in a first element, which has been assigned to a first list;
Figure 5 is a schematic diagram showing the registers of the sub-module of Figure 4, where further data is stored in a second element, which has also been assigned to the first list;
Figure 6 is a schematic diagram showing the registers of the sub-module of Figure 5, where further data is stored in a third element, which has been assigned to a second list;
Figure 7 is a schematic diagram showing the registers of the sub-module of Figure 6, where further data is stored in a fourth element, which has also been assigned to the first list;
Figure 8 is a schematic diagram showing the registers of the sub-module of Figure 7, where data from the first element of the first list has been forwarded to the master;
Figure 9 is a schematic diagram showing the registers of the sub-module of Figure 8, where data from the first element of the second list has been forwarded to the master; and
Figure 10 is a flow diagram representing a method according to an embodiment of the present invention.

### DETAILED DESCRIPTION

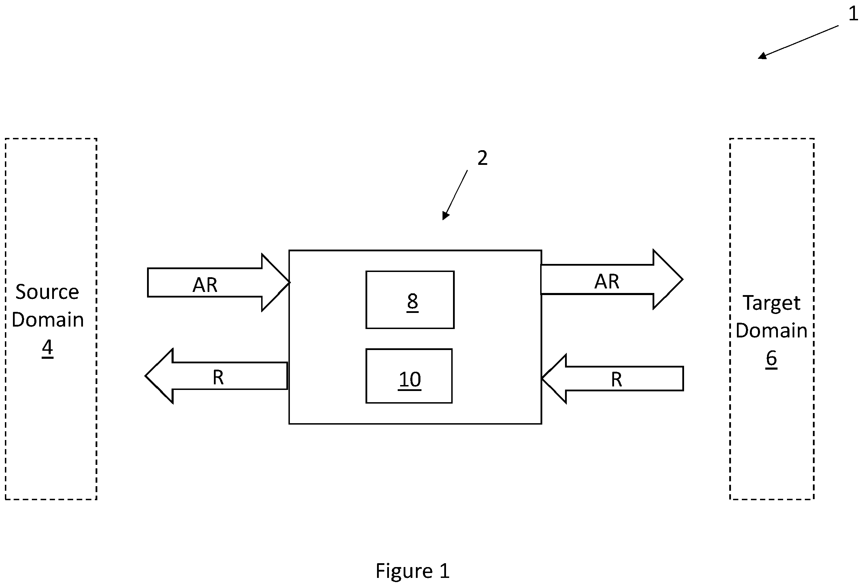

Fig. 1 is a block diagram illustrating an electronic device 1 comprising a module 2 in accordance with an embodiment of the present invention. The module 2 is arranged to 'down-break' read transactions on an AXI data bus which originate from a first transaction 'source' domain 4, i.e. a 'master side', to make them suitable for supply to a second transaction 'target' domain 6, i.e. a 'slave side'. The bus width of the source domain 4 is greater than the bus width of the target domain 6.

The module 2 receives read transactions from a device (e.g. a master device) in the source domain 4, which contain a request on the read address (AR) channel. Converter logic 8 of the module 2 down-breaks the read transactions by reducing their width from the wider bus width of the source domain 4 to the narrower bus width of the target domain 6 and splitting each transaction into an appropriate number of smaller transactions for supply to the target domain 6. The read data on the read (R) channel is then re-combined by a portion of the module 2, referred to as the "Read FIFO" (First-In-First-Out) 10, the function of which is described in greater detail below.

The converter logic 8 determines from the burst length of transactions received via the source domain 4 side - together with prior knowledge of the respective bus widths of each domain 4, 6 - how many transactions at the reduced width and burst length will be needed. The reduction in width and burst length may then be carried out simultaneously by the converter logic 8.

In addition to reducing the width and burst length of read transactions, before forwarding them to the target domain, the module 2 (optionally the converter logic 8) can allow different read transactions to bypass one another. Specifically, where the module 2 receives a first read transaction which needs to be broken into a plurality of sub-transactions, and then receives a second read transaction, which is shorter (i.e. has a lower burst length) than the first read transaction, it may allow the second transaction to bypass the first under certain circumstances. These specific circumstances are where the second transaction is short enough that it is not broken down by the converter logic 8, it is shorter than a bypass threshold parameter, and it is associated with a different transaction ID than the first read transaction.

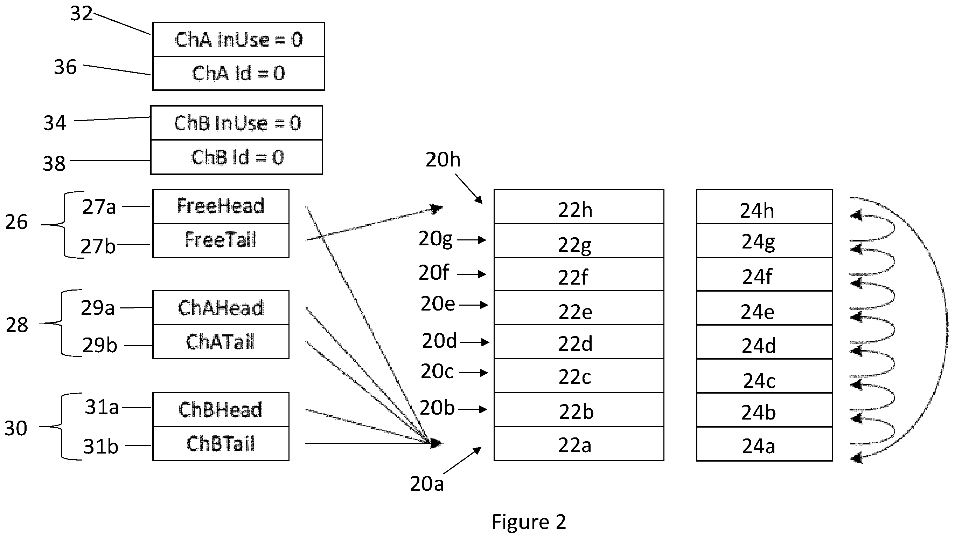

The Read FIFO 10 re-combines the read data to make use of the width and burst length allowed by the source domain 4. The functioning of the Read FIFO 10 is described in greater detail with reference to Figures 2-9, which are schematic drawings representing various stages in the operation of the Read FIFO 10.

As seen in Figure 2, the Read FIFO 10 comprises a plurality of storage elements 20a-20h, each including a respective data register 22a-h, and respective linking registers 24a-h. In the illustrated example, there are eight such storage elements 20a-20h. Although eight storage elements are illustrated for clarity, in practice more or fewer could be employed.

The Read FIFO 10 further includes three lists, a free list 26, an "A" list 28, and a "B" list 30, where "A" and "B" are just arbitrary labels which are selected to refer to these lists. As described below, each storage element 20a-20h can belong to only one of the lists at any given time. The free list 26 is defined by a Free Head register 27a, specifying the first available storage element, and a Free Tail register 27b, specifying the last available storage element, i.e. the array indices of these elements. The "A" list, is defined by an A Head register 29a, specifying the first storage element in the A list (i.e. the array index of the storage element at the start of the list), and a B Tail register 29b, specifying the last storage element in the A list (i.e. the array index of the storage element at the end of the list). The "B" list is defined by a B Head register 31a, specifying the first storage element in the B list 28 and a B Tail register 31b, specifying the last storage element in the B list. The Read FIFO 10 further includes an A Use register 32, and a B Use register, 34, indicating respectively whether the first and second lists are in use, and an A ID register 36 and a B ID register 38, indicating respectively the transaction IDs associated with the data stored in the A list and the B list.

The Read FIFO 10 therefore defines two usable "lists" or "channels", which can be used to define two virtual First-In-First-Out channels, from which data can be read out independently and which are each dynamically resizable, in the manner described below. Although only two lists are illustrated for clarity, in practice more could be employed.

In the configuration shown in Figure 2, no data is stored in any of the storage elements 20a-20h of the Read FIFO 10, and therefore all the storage elements are in the free list, with all the data registers 22a-h empty. The values in the linking registers 24a-24h are set so that the linking register of each storage element points to the storage element with the following index in the array, i.e. element 20a points to element 20b, element 20b points to element 20c and so on. When an *element* is said to point to another element then the value of the linking register of the first element is set to the index of the second. The free list 26 wraps around at the element 22h with the highest index so that its linking register 24h points back at the element 20a. The Use registers 32, 34 indicate that both the lists A and B are not in use, and their respective Head registers, 29a, 31a and Tail registers 29b, 31b, both point to element 20a.

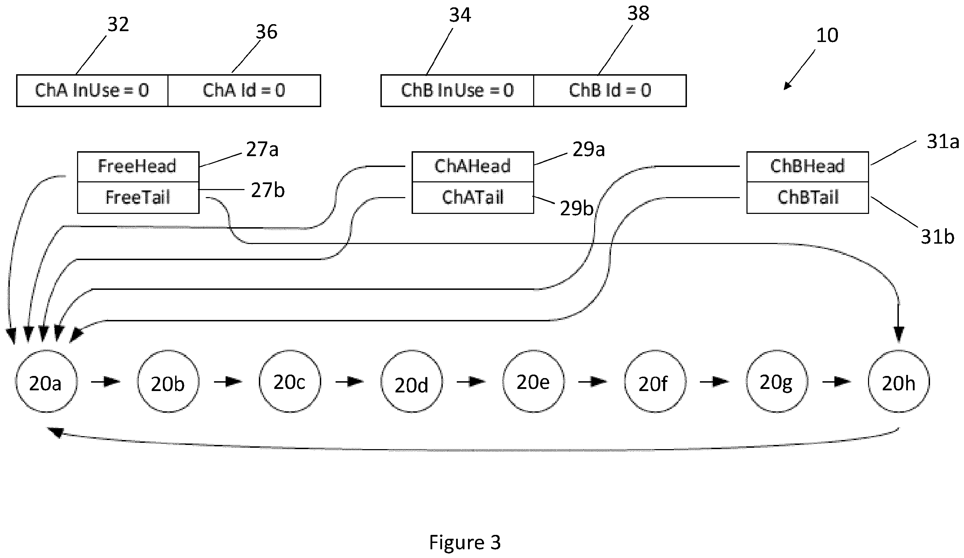

Figure 3 shows an alternative representation of the Read FIFO 10 of Figure 2. The three lists and their associated registers are all represented in the same manner. The difference here is that the registers of each storage element are not shown, rather each storage element 20a-20h is represented as a circle, and the contents of the linking registers of each of these storage elements is represented as an arrow, linking to the storage element 20a-20h to which the linking register points.

As stated above, in the configuration shown in Figures 2 and 3, no data is stored in any of the storage elements 20a-20h of the Read FIFO 10. Data is only received at the Read FIFO 10 following the issuing of a sub- transaction to the target domain 6 by the module 2, or the issuing of a transaction, where no down-sizing is required.

The Read FIFO 10 can affect the issuing of these transactions or sub-transactions. Specifically, before issuing a new read transaction to the target domain 6, i.e. a transaction associated with a new transaction ID, the module 2 can check how many read transactions are outstanding, i.e. awaiting the return of data from the slave of the target domain 6. In this example there are two available "channels" A and B, and therefore if there are two transaction IDs for which data is still required from the target domain 6 (i.e. both channels are in use) then the module 2 will not send a further read transaction to the target domain 6 until one of the read transactions is no longer outstanding, i.e. all of the data associated with that transaction ID has been received by the Read FIFO 10 and forwarded to the source domain 4.

In addition to checking that one of the lists is available to accommodate a new transaction, the module 2 will also check that there are enough storage elements 20a-20h available, i.e. containing no data, to store the data requested by a new transaction, before that transaction is sent. Where there is an insufficient number of available storage elements 20a-20h, the module 2 is prevented from sending new addresses to the target domain 6 until data already stored in the Read FIFO 10 has been forwarded to the source domain 4, freeing up storage elements in the Read FIFO 10.

Where it is determined that a transaction (or series of sub-transactions) is to be sent to the target domain 6, the properties of said transaction can also depend on properties of the Read FIFO 10. Specifically, as well as being limited by the maximum transaction burst length limit of the target domain, the size of the sub-transaction is also limited by the amount of space available in the FIFO. The module 2 calculates the total amount of data storage, across all the storage elements which are in the free list 26. Where the sub-transaction is associated with a transaction ID for an existing list (i.e. it is not the first sub-transaction for that transaction ID) the module 2 will include any part-full storage elements for that list (which are not completed, i.e. are usable) in that calculation. If the amount of data storage which is available is lower than the maximum transaction burst length limit, then the amount of read data which is requested in a given sub-transaction will be limited to the total amount of data storage available in the FIFO. Furthermore, if this amount is below a minimum threshold parameter, then the module 2 will wait until more space becomes available when data has been forwarded to the source domain 4 before sending another sub-transaction to the target domain 6, i.e. so that more than a minimum amount of data is always being requested in each sub-transaction.

When checking how much data can be requested for a given sub-transaction, the module 2 must take into account that some data may "use" an entire data register, so that the register in question is completed even where the received data does not fill up all of a register's capacity, for example where the received data is "narrow" or "unaligned", as described below.

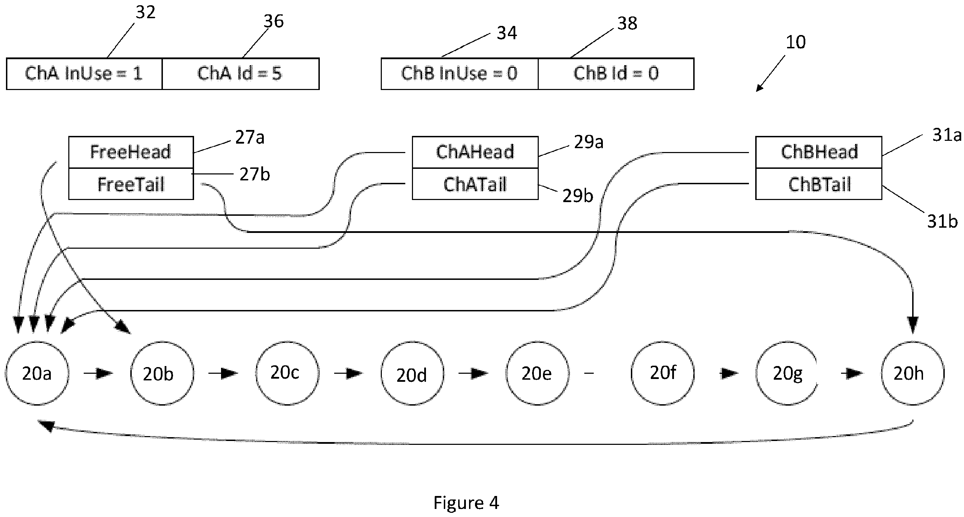

Figure 4 shows the state of the Read FIFO 10 after receiving data with a transaction ID 5. The process for receiving this data, and storing it in a storage element, is described herein below. Here the storage element 20a has been used to store data received from the target domain 6, in response to a sub-transaction sent by the module 6.

Each storage element 20a-20h is a register array entry which holds one beat's worth of data, i.e. an amount of data which can be sent to the source domain 4 in a single data transfer, albeit each single data transfer may require multiple clock cycles. This data can be considered as three separate values (which may each comprise multiple bits), a "Data" value, containing the data content, a "Last" value, indicating whether or not this is the last data associated with a given transaction ID, and a "Status value".

The "Status value" can indicate four different conditions:
a) The slave device of the target domain 6 is unable to do the requested operation
b) The address of the sub-transaction is not valid
c) The transaction is okay
d) The exclusive transaction is okay

Where an "exclusive transaction" (or exclusive access transaction) is a known type of transaction which is available in an AXI bus arrangement, as described in this particular example.

First the Read FIFO 10 checks, for the received data, whether a list 28, 30 is already in use which is associated with the same transaction ID, i.e. if a virtual FIFO for the ID already exists. If a list already exists which is associated with the same transaction ID, then the Read FIFO 10 checks whether the "Data" value already stored in the data register of the storage element at the tail of this list is completed, i.e. whether due to the data already stored in the data register it is no longer suitable to store further data, i.e. its data storage capability is "completed" at that time.

A data register may be completed because enough data has been received from the target domain 6 and stored in that data register to fill the capacity of the data register. In certain circumstances, the data register of a storage element may also be considered "completed" even where all of the data storage space in the data register is not occupied. For example, where the received data is "narrow", meaning that the width of the transaction is narrower than the width of the data in the source domain, i.e. that the size field of the transaction is smaller than log2 of the byte-width of the source domain data. This results in a transaction from the source domain which has an invalid part (i.e. strobe values 0), which, when broken down, might give one or more sub-transactions which are entirely invalid, and such sub-transactions may be filtered. This may also be the case where the data is "unaligned" i.e. where the address of the transaction is unaligned in a way so that the valid data starts more than the second bus width (of a target domain) into the transaction. Again this may result in some of the invalid bytes on the source domain side being filtered from being forwarded to the target domain 6. In these cases only a part of the data received by the Read FIFO 10 from the target domain will be valid when it is forwarded back to the source domain 4, i.e. the master. In this case the storage element storing such received data is considered completed when the valid data has been received from the target domain 6.

Once a data register is completed, the contents of the storage element is ready to be forwarded in one beat to the source domain. It typically takes several beats of received data from the target domain to fill up a storage element.

If the Tail element of the associated list has not been filled up yet (and is not completed for some other reason), then the received data is added into this element. "Adding" the received data to an existing storage element means that the received "Data value" is appended to the "Data value" which is already stored in the data register. It further means that the "Last" value may be changed, if the received data is from the last sub-transaction for that transaction ID, and the "Status" value is recalculated depending on the "Status" value of the newly received data.

Of the conditions described above, the a) condition is the highest order condition, down to the d) condition which is the lowest order condition. Where new data is added to an existing storage element, the status information for that storage element is recalculated, so that the overall "Status" value for the storage element is the highest order condition associated with any of the data in that storage element i.e. if any of the sub-transactions returns an a) condition, the condition for that storage element over all will be a), and vice versa the condition associated with all data in a storage element must be d) for the status value for the of the storage element to be d).

If a list 28, 30 is not already associated with the transaction ID of the received data, or if the storage element at the end of the list already associated with the transaction ID is completed, then the received data will be stored in a new storage element, specifically the storage element which is at the head of the free list 26, i.e. the first available storage element, which in the example of Figure 3 is storage element 20a.

Adding the data to the storage element 20a takes place by a similar process to that described above. The received "Data value" is copied to the data register of the storage element 20a, and so is the "Status" value - no recalculation is required since this is the first status value received by the storage element 20a. If the received data is from the last sub-transaction associated with that transaction ID then the "Last" field is also set.

If a list 28, 30 associated with the transaction ID of the received data does not already exist, then a currently unused list 28, 30 is allocated for it - which in the example of Figure 3 could be either list A 28 or list B 30. In this example List A 28 is used. Thus, the A Use register bit 32 is set to 1 and the A ID register 36 is set to the ID of the received data, in this example Transaction ID = 5. These changes are shown in Figure 4.

In either case, whether or not a list was already in use for the transaction ID, since storage element 20a has now been used to store data, it is added to the list corresponding to the transaction ID of the data, and therefore correspondingly removed from the free list 26. By this it is meant that the storage element 20a is removed from the head of the free list 26, so that the Free Head register 27a now refers, or "points", to element 20b, whilst the Tail register 29b of the A list refers to the storage element 20a, which was incidentally the case already in the configuration of Figure 3.

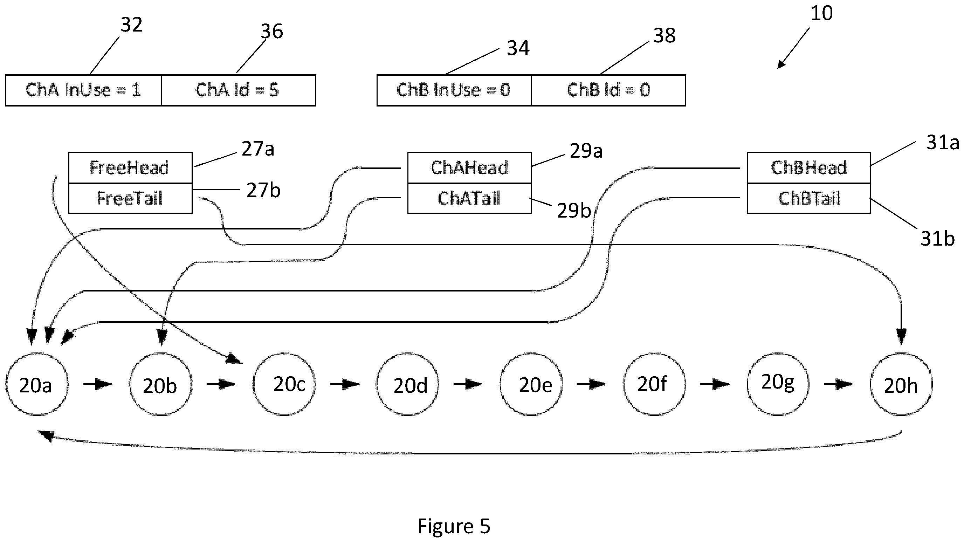

Figure 5 shows the Read FIFO 10 of Figure 4, in which additional data has now been received having the same transaction ID (ID=5). Storage element 20b has now been used to store the additional read data, using the process described above. It is seen from the arrow that the A Tail register 29b now points to storage element 20b, which is now the last element in the A list 28, whist the Head register 27a of the free list 26 (also referred to as an availability list) points to storage element 20c. The linking register 24a of storage element 20a does not need to be updated to point to storage element 20a, since it already pointed to that storage element as seen in Figure 3. The free list 26 now holds the elements 20c- 20d - 20e - 20f - 20g - 20h while the A list 28 holds the elements 20a and 20b. The B list 30 list is still empty.

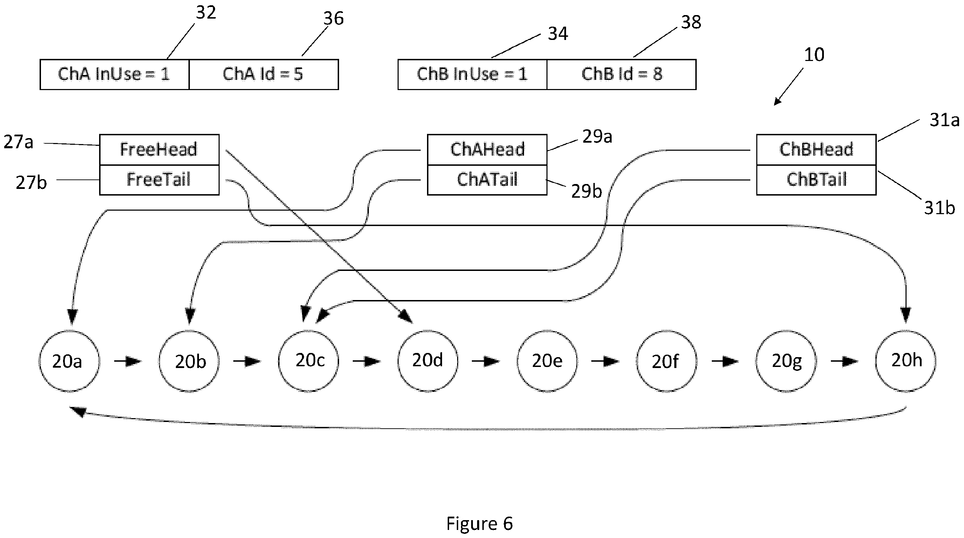

Figure 6 shows the Read FIFO 10 of Figure 5, where data associated with a new transaction ID, transaction ID=8, has been received, and stored in storage element 20c.

As a result of this storing, the B Use register 34 has been updated to show that the B list 30 is now in use, and the B ID register 38 has also been updated to contain the transaction ID = 8, associated with the data now stored in the B list 30. The B Head register 31a, and B Tail register 31b, both point to the newly added storage element 20c, which has been removed from the free list 26, Head register 27a which now points to storage element 20d, the first available storage element. Thus the free list 26 now holds the elements 20d - 20e - 20f - 20g - 20h. The A list 28 holds the storage elements 20a and 20b the B list 30 list now holds the element 20c.

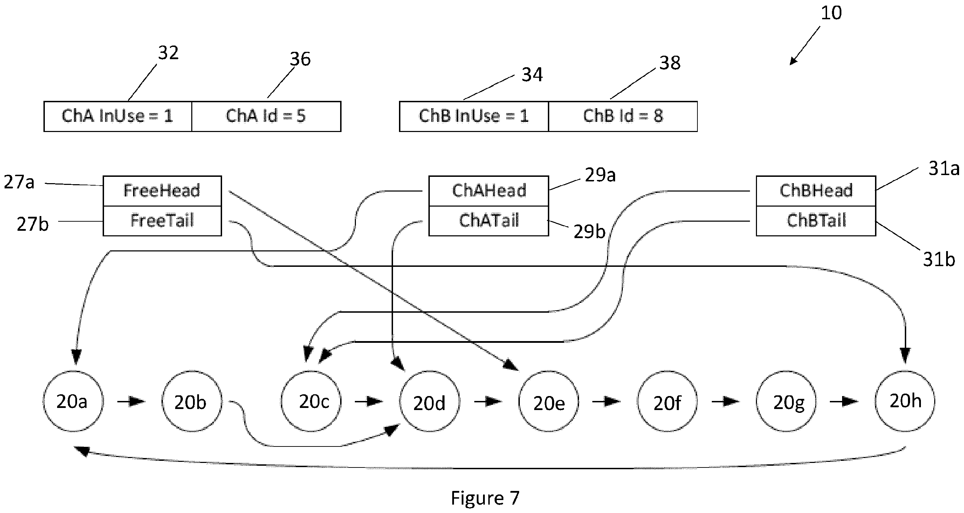

Figure 7 shows the Read FIFO 10 of Figure 6, where additional data associated with the transaction ID = 5 (i.e. Channel A) has been received and added to the A list 28. In order to store this additional data a new storage element 20d has been added to the A list. In order to do this the A Tail register 29b has been changed, to point to the storage element 20d, indicating that it is the last element in the A list, and the linking register 24b of the preceding storage element 20b of the A list 28 has been updated to point to the storage element 20d, as indicated by the arrow connecting storage elements 20b and 20d in Figure 7. Correspondingly, the Free Head register 27a of the free list 26 has been updated to point to the first available storage element 20e, i.e. the first storage element which is not in use storing data. The free list 26 after this holds the elements 20e - 20f - 20g - 20h, the A list 28 holds the elements 20a-20b-20d and the B list 30 holds the element 20c.

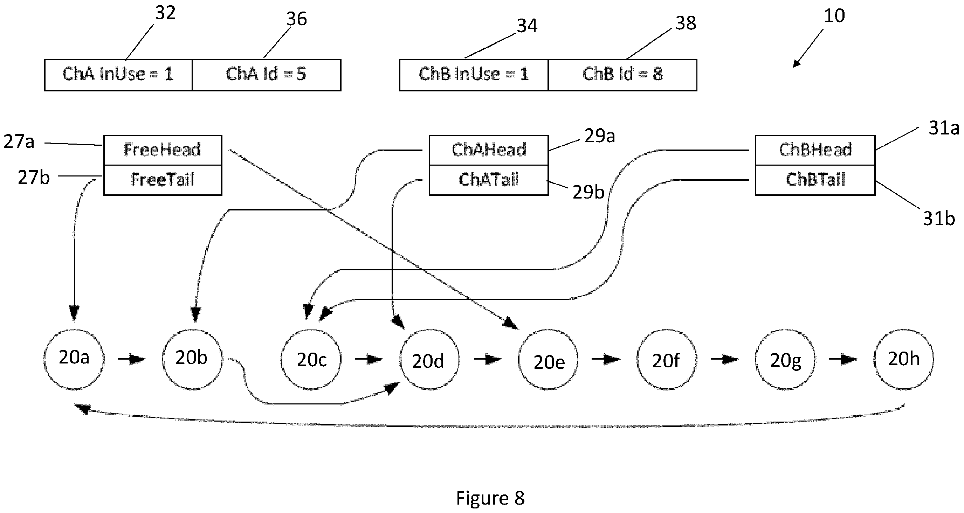

Simultaneously with, and/or interspersed with, receiving data from the target domain 6, the Read FIFO 10 can also send the received data from each storage element to the source domain 4. The result of this process is illustrated in Figure 8, in which the data stored in element 20a, of List A 28 has now been forwarded to the source domain 4.

A storage element 20a-20h of the Read FIFO 10 is said to be ready to send when enough data has been received from the target domain 6 so that one beat of data can be forwarded to the source domain 4.

When sending data from a storage element 20a-20h to the target domain, the contents of the storage element at the head of the particular list associated with the chosen ID (e.g. the storage element indicated by the A Head register 29a or the B Head register 31a) is forwarded to the master in one beat. The storage element from which data has been sent to the source domain 6 is then moved to the free list 26. If the list after this becomes empty, then the Use register 32, 34 and the ID register 36, 38 for the list are set to 0, so that the list 28, 30 is once again indicated as being available for use.

In this example, the first storage element 20a of the A list 28 is ready to send to the source domain 4. To do so the contents of the data register 22a of the storage element at the head of the A list, as indicated by the A Head register 29a, i.e. storage element 20a, are sent, in a single beat, to the source domain 6, leaving the storage element 20a once again empty. The storage element 20a is therefore moved to the tail of the free list 26, as indicated by the Free Tail register 27b, i.e. the Free Tail register 27b is updated to point to the storage element 20a. The new head of the A list is now element 20b, as pointed to by the A Head register 29a. The free list 26 now holds the elements 20e - 20f - 20g - 20h - 20a, the A list 28 holds the elements 20b-20d and the B list 30 holds the element 20c.

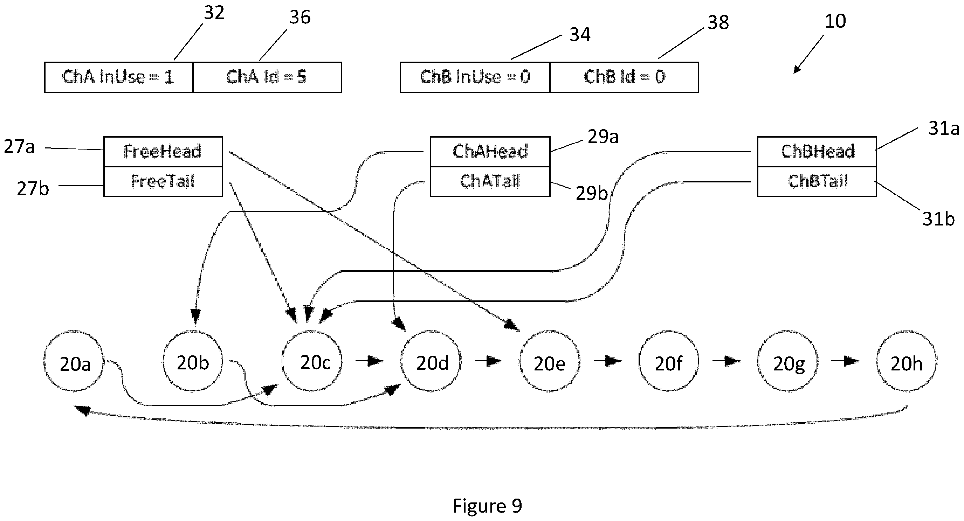

The storage element 20c of the B list 30 may also be forwarded to the source domain 4, the result of which is illustrated in Figure 9. The Free Tail register 27b is therefore changed again to point to the storage element 20c, which is newly added to the free list 26. The free list 26 after this holds the elements 20e - 20f - 20g - 20h - 20a - 20c. The A list 28 holds the elements 20b-20d and the B list 30 is empty and no longer in use. The B Head register 31a does not need to be updated to point to the next storage element in the B list 30, since storage element 20c was the last (and also only) storage element in the B list 30, and therefore the B list 30 is no longer in use. The B Head register 31a and the B Tail register 31b can therefore be left unchanged until the B list 30 is used for a new transaction ID. The B Use register 34 and the B ID register 38 are both set to 0 to reflect that the B list 30 is no longer in use.

When forwarding the contents of the head elements 20a, 20c, to the source domain 4, the module 2 sometimes has to arbitrate i.e. decide, which list to forward a data packet from first. In this particular example, where data from some elements of one of the lists has already been sent to the source domain 4, the module 2 will decide to continue to send data from the data registers of elements in this list. For example, from the configuration of Figure 8, if the module 2 had to select between sending storage element 20b (of list A) and storage element 20c (of list B), it would send (the data contents of) storage element 20b, since it belongs to list A, and the data from the register of the storage element 20a, which previously belonged to list A, has already been sent to the source domain 4, i.e. data from that transaction ID has already been forwarded to the source domain 4. This arbitration may be done by the Read FIFO 10, or may be done by another part of the module 2.

If data is stored in the read FIFO 10 which is associated with two different transactions IDs, but data associated with either has not yet been sent to the source domain 4, e.g. as illustrated in Figure 7, and the module 2 needs to arbitrate which data to send, it will send data from the first element of the shorter list, i.e. the list containing the lower number of storage elements, in this case storage element 20c (since the B list 30 only contains this one storage element, whereas the A list 28 contains three storage elements).

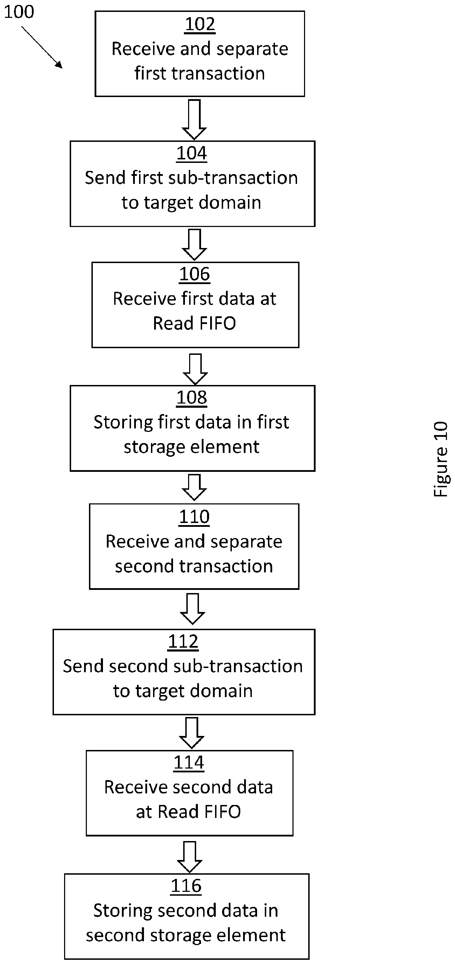

The steps of the method 100 described above are also seen in the flow diagram of Figure 10. In a first step 102, a read transaction is received from the transaction source domain, and is separated out into a plurality of sub-transactions. In a next step 104, a first one of this plurality of sub-transactions is sent to the transaction target domain 6.

Next, at step 106, first data associated with the first transaction ID is received by the Read FIFO 10, in response to sending a sub-transaction of the first plurality of sub-transactions to the transaction target domain. Then, at step 108, this first data is stored in the data register of a first storage element, and the first storage element assigned to the first list, as described above.

This process is then repeated for a second transaction, associated with a second transaction ID, to store data associated with this second transaction ID in a separate list of the Read FIFO 10, so as to be independently accessible, as described above.

Specifically, the method further includes at step 110, receiving a second read transaction from the transaction source domain, associated with a second transaction ID, and separating this transaction out into a plurality of sub-transactions. In a next step 112, a first one of this plurality of sub-transactions (i.e. overall a second sub-transaction) is sent to the transaction target domain 6.

Next, at step 114, second data associated with the second transaction ID is received by the Read FIFO 10, in response to sending a sub-transaction of the second plurality of sub-transactions to the transaction target domain. Then, at step 116, this second data is stored in the data register of a second storage element, and the second storage element assigned to the second list, as described above.

Although not illustrated, this method may also include any or all of the additional method steps described above with reference to Figures 1-9.

It will be appreciated by those skilled in the art that the invention has been illustrated by describing one or more specific embodiments thereof, but is not limited to these embodiments; many variations and modifications are possible, within the scope of the accompanying claims.

## Claims

1. An electronic device comprising a module configured to transfer data bus transactions from a transaction source domain having a first bus width to a transaction target domain having a second bus width less than the first bus width,
the module being configured to carry out the steps of:
receiving a first read transaction from the transaction source domain, associated with a first transaction ID and indicating a first address of the transaction target domain;
separating the first read transaction into a first plurality of sub-transactions,
wherein the first plurality of sub-transactions have the second bus width;
sending the first plurality of sub-transactions to the transaction target domain;
receiving a second read transaction from the transaction source domain, associated with a second transaction ID and indicating a second address of the transaction target domain;
separating the second read transaction into a second plurality of sub-transactions, wherein the second plurality of sub-transactions have the second bus width; and
sending the second plurality of sub-transactions to the transaction target domain;
the module further comprising:
a plurality of storage elements, comprising at least one data register, for storing data received from the transaction target domain;
the module further configured to carry out the steps of:
receiving first data associated with the first transaction ID, in response to sending a sub-transaction of the first plurality of sub-transactions to the transaction target domain;
storing the first data in the data register of a first storage element and assigning the first storage element to a first list; and
receiving second data associated with the second transaction ID, in response to sending a sub-transaction of the second plurality of sub-transactions to the transaction target domain;
storing the second data in the data register of a second storage element, and assigning the second storage element to a second list;
such that data can be read out to the transaction source domain from the first list and the second list independently of each other.

2. The electronic device as claimed in claim 1, wherein the first read transaction has a first transaction burst length and wherein the module is configured to carry out the step of:
separating the first read transaction into the first plurality of sub-transactions, wherein the first plurality of sub-transactions each have a respective second transaction burst length less than the first transaction burst length.

3. The electronic device as claimed in claim 1 or 2, wherein the module is further configured to carry out the steps of:
receiving further data associated with the first transaction ID, in response to sending a further sub-transaction of the first plurality of sub-transactions to the transaction target domain;
checking whether the data register of the first storage element is completed; and
if the data register of the first storage element is not completed, adding the further data to the data stored in the data register of the first storage element; and
if the first storage element is completed, storing the further data in the data register of a third storage element and assigning the third storage element to the first list.

4. The electronic device as claimed in any preceding claim, wherein the module is further configured to carry out the steps of:
checking whether each of the plurality of storage elements is currently storing data; and
if all of the storage elements are currently storing data, then not sending a sub-transaction to the target domain until at least one storage element is no longer storing data.

5. The electronic device as claimed in any preceding claim, wherein the module is further configured to carry out the steps of:
checking, upon receipt of a read transaction from the source domain, the total amount of storage space available across the plurality of storage elements; and
if the total amount of storage space available is below a minimum threshold parameter, then not sending a sub-transaction to the target domain until data has been forwarded from the module to the target domain.

6. The electronic device as claimed in any preceding claim, wherein the module is further configured to carry out the steps of:
checking, upon receipt of a read transaction from the source domain, the total amount of storage space available across the plurality of storage elements; and
if the total amount of storage space available is below the maximum transaction burst length limit of the target domain, then limiting the size of the next sub-transaction to the total amount of storage space available.

7. The electronic device as claimed in any preceding claim, wherein the module defines a total number of lists to which the plurality of storage elements can be assigned, and wherein the module is further configured to carry out the steps of:
checking, upon receipt of a further read transaction from the source domain, whether a list already corresponds to the transaction ID associated with the further read transaction; and
if no list corresponds to the transaction ID, checking whether a number of lists in use is equal to the total number of lists; and
if the total number of lists in use is equal to the total number of lists, then not sending sub-transactions, associated with the further read transaction, to the target domain until a list becomes available for use.

8. The electronic device as claimed in any preceding claim, wherein each storage element further comprises a linking register, for referencing another of the storage elements as being a subsequent storage element assigned to the same list.

9. The electronic device as claimed in any preceding claim, wherein the module additionally comprises an availability list, indicating a sub-set of the plurality of storage elements which are available for data storage.

10. The electronic device as claimed in any preceding claim, wherein the module is further configured to carry out the step of:
forwarding the data from the data register of the storage element specified first in the first list and/or the second list to the source domain, once a sending condition is met, wherein the sending condition requires that the data register of the storage element is completed.

11. The electronic device as claimed in any preceding claim, wherein the module is further configured to carry out the steps of:
when a storage element in the first list and a storage element in the second list are both available to send to the source domain, checking whether data associated with a transaction ID of the first list or the second list has already been sent to the source domain; and
if data associated with the transaction ID of the first list has already been sent to the source domain, forwarding the storage element which is first in the first list; and
if no data associated with the transaction ID of the first list or the transaction ID of the second list has been forwarded to the storage element, checking whether the first list or the second list contains a lower number of storage elements, and forwarding data from a data register of a storage element to the source domain from the list containing the lower number of storage elements.

12. A method of mediating a read transaction from a transaction source domain having a first bus width to a transaction target domain having a second bus width less than the first bus width, the method comprising:
receiving a first read transaction from the transaction source domain, associated with a first transaction ID and indicating a first address of the transaction target domain;
separating the first read transaction into a first plurality of sub-transactions,
wherein the first plurality of sub-transactions have the second bus width;
sending the first plurality of sub-transactions to the transaction target domain;
receiving first data associated with the first transaction ID, in response to sending a sub-transaction of the first plurality of sub-transactions to the transaction target domain;
storing the first data in the data register of a first storage element and assigning the first storage element to a first list;
receiving a second read transaction from the transaction source domain, associated with a second transaction ID and indicating a second address of the transaction target domain;
separating the second read transaction into a second plurality of sub-transactions, wherein the second plurality of sub-transactions have the second bus width;
sending the second plurality of sub-transactions to the transaction target domain;
receiving second data associated with the second transaction ID, in response to sending a sub-transaction of the second plurality of sub-transactions to the transaction target domain;
storing the second data in a data register of a second storage element, and assigning the second storage element to a second list; and
reading out data to the transaction source domain from the first list and the second list independently of each other.

13. The method as claimed in claim 12, wherein the first read transaction has a first transaction burst length and the method comprises separating the first read transaction into the first plurality of sub-transactions, wherein the first plurality of sub-transactions each have a respective second transaction burst length less than the first transaction burst length.

14. The method as claimed in claim 12 or 13, wherein the method further comprises:
receiving further data associated with the first transaction ID, in response to sending a further sub-transaction of the first plurality of sub-transactions to the transaction target domain;
checking whether the data register of the first storage element is completed; and
if the data register of the first storage element is not completed, adding the further data to the data stored in the data register of the first storage element; and
if the first storage element is completed, storing the further data in the data register of a third storage element and assigning the third storage element to the first list.

15. A computer software product comprising instructions that, when executed by a processor, cause the processor to carry out the method as claimed in any of claims 12 to 14.
